# EUROPÄISCHE PATENTSCHRIFT

(11) **EP 2 558 760 B1**
(45) Veröffentlichungstag und Bekanntmachung des Hinweises auf die Patenterteilung: **09.04.2014**
(21) Anmeldenummer: 11707076.3
(22) Anmeldetag: 09.02.2011
(51) Int. Cl.: F16L 5/06

(54) **HALTERUNG FÜR EIN ZYLINDRISCHES OBJEKT IN EINER PLATTE**
DEVICE FOR SUPPORTING A CYLINDRICAL OBJECT IN A PLATE
DISPOSITIF POUR LE SUPPORT D'UB OBJET CYLINDRIQUE DANS UNE PAROI

(30) Priorität: 15.04.2010 DE 202010005054 U
(43) Veröffentlichungstag der Anmeldung: 20.02.2013
(73) Patentinhaber: Pepperl + Fuchs GmbH, 68307 Mannheim (DE)
(72) Erfinder: BERG, Eckhard, 67269 Grünstadt (DE); KNITTEL, Thomas, 67165 Waldsee (DE)
(74) Vertreter: Schiffer, Axel Martin
(86) Internationale Anmeldenummer: PCT/EP2011/000603
(87) Internationale Veröffentlichungsnummer: WO 2011/128007

(56) Entgegenhaltungen:
- DE-C1- 4 128 632
- DE-U1-202009 010 452
- FR-A- 1 562 838
- FR-A1- 2 688 355
- US-A- 1 461 945
- US-A- 3 104 120
- US-A1- 2005 062 283
- US-A1- 2009 174 154
- US-B1- 6 193 284

## Beschreibung

Die Erfindung betrifft eine Halterung für ein zylindrisches Objekt, insbesondere ein Rohr oder einen Sensor, in einem Durchbruch einer Platte in einer hygienisch anspruchsvollen Umgebung nach dem Oberbegriff des Anspruchs 1. Eine solche Halterung ist aus der FR 1 562 838 A bekannt.

In hygienisch anspruchsvollen Umgebungen, beispielsweise in der Lebensmittelindustrie oder im medizinischen Bereich, müssen Anlagen und Geräte bestimmte Anforderungen hinsichtlich Gestaltung und Reinigbarkeit erfüllen, die zumeist in entsprechenden Normen und Richtlinien niedergelegt sind. Solche Normen und Richtlinien sind beispielsweise von der Food and Drug Administration (FDA) oder der European Hygienic Engineering and Design Group (EHEDG) erlassen worden.

Ein wichtiges Kriterium bei der Gestaltung von Anlagen und Geräten für hygienische Bereiche, welche auch als Nass- oder Spritzbereiche bezeichnet werden, ist die Vermeidung von Spalten, Ritzen oder sonstigen schwer zugänglichen Orten, an denen sich Schmutz oder Reinigungsmittelreste anlagern können.

Dementsprechend sind beispielsweise Sensoren entwickelt worden, die diese Anforderungen erfüllen. Solche Sensoren haben meist eine zylindrische äußere Form ohne Spalten oder Ritzen, in denen sich Schmutzstoffe oder Reinigungsmittel ablagern können.

Häufig ist es erforderlich, solche Sensoren an einer Montageoberfläche, insbesondere einer Montageplatte, zu befestigen. Entsprechende Halterungen oder Befestigungselemente müssen daher, insbesondere im Zusammenspiel mit den Sensoren, ebenfalls die genannten Anforderungen erfüllen. Bei der Montageplatte kann es sich grundsätzlich um eine zwischen einer hygienischen Umgebung und einer nichthygienischen Umgebung angeordnete Platte oder auch um einen frei im Raum stehenden Halter handeln, der von beiden Montageseiten her hygienischen Anforderungen genügen muss.

Um eine solche Halterung in einem hygienisch anspruchsvollen Umfeld, beispielsweise in der Lebensmittelindustrie oder im medizinischen Bereich, einsetzen zu können, muss die Halterung spaltfrei ausgeführt und gut zu reinigen sein, damit sich keine Schmutzstoffe in Ritzen oder Spalten festsetzen können.

Der Erfindung liegt die **Aufgabe** zugrunde, eine Halterung für ein zylindrisches Objekt in einem Durchbruch einer Platte bereitzustellen, die spaltfrei ausgeführt und leicht zu reinigen ist.

Die Aufgabe wird erfindungsgemäß durch eine Halterung mit den Merkmalen des Anspruchs 1 gelöst. Vorteilhafte Ausgestaltungen sind in den abhängigen Ansprüchen, der nachfolgenden Beschreibung sowie den Figuren beschrieben beziehungsweise dargestellt.

Die oben genannte Halterung ist erfindungsgemäß dadurch weitergebildet, dass an dem ersten Buchsenteil eine Anschlagfläche gebildet ist, durch welche das erste Buchsenteil so an der Platte abstützbar ist, dass die Dichtung in einem montierten Zustand in dem Aufnahmebereich um ein definiertes Maß zusammenpressbar ist, wobei eine definierte Verformung der Dichtung zum Herstellen eines spaltfreien Übergangs erzeugbar ist.

Der Zweck der Dichtung besteht im Wesentlichen darin, die Buchsenteile spaltfrei mit der Platte zu verbinden, um Spalten oder Ritzen zwischen den Buchsenteilen und der Platte, an denen sich Ablagerungen ansammeln können, zu vermeiden. Des Weiteren dient die Dichtung einer im Wesentlichen spaltfreien Aufnahme des zylindrischen Objekts, so dass sich auch zwischen den Buchsenteilen und dem zylindrischen Objekt keine Ablagerungen ansammeln können.

Ein Grundgedanke der Erfindung besteht darin, die Halterung so zu gestalten, dass bei einem Befestigen der Halterung an der Platte eine definierte Verformung der Dichtung erzeugt wird.

Hierzu ist erfindungsgemäß vorgesehen, an dem ersten Buchsenteil eine Anschlagfläche bereitzustellen, mit welcher das Buchsenteil an der Platte abstützbar ist. Hierdurch wird erreicht, dass die Dichtung derart zwischen der Platte und einem Teil der Halterung positioniert werden kann, dass bei einem Abstützen des Buchsenteils an der Platte die Dichtung um ein definiertes Maß zwischen der Platte und einem Teil der Halterung zusammengepresst wird. Durch das Zusammenpressen erfolgt eine definierte Verformung der Dichtung. Die Dichtung ist so ausgeführt, dass durch die definierte Verformung ein im Wesentlichen spaltfreier Übergang von der Halterung zu der Platte erzeugt wird.

Durch die Anschlagfläche wird erreicht, dass ein Aufnahmebereich einer definierten Größe bereitgestellt wird, so dass die Dichtung beim Befestigen der Halterung an der Platte nicht beliebig zusammengedrückt werden kann, sondern eine definierte, durch die Anschlagfläche begrenzte Verformung erfährt. Die Verformung ist somit konstruktiv vorgegeben und nicht abhängig von der Handhabung oder Bedienung der Halterung durch einen Anwender. Vorzugsweise stützt sich die Anschlagfläche direkt an der Platte ab, das heißt es besteht ein direkter Kontakt zwischen der Anschlagfläche und der Platte. Grundsätzlich ist es aber auch möglich, dass die Abstützung über ein Zwischenelement erfolgt.

Die Anschlagfläche beziehungsweise die Größe des Aufnahmebereichs und die Dichtung sind dabei so aufeinander abgestimmt, dass die Dichtung beim Befestigen des Buchsenteils oder der Halterung an der Platte auf ein durch die Anschlagfläche begrenztes definiertes Maß gepresst oder gedrückt wird, wodurch die gewünschte Verformung erreicht wird.

Unter einem spaltfreien Übergang ist vorliegend insbesondere ein Übergang zu verstehen, der für die Zwecke der Hygiene geeignet ist.

Die Dichtung ist vorzugsweise ringförmig gestaltet und weist eine an den Aufnahmbereich angepasste Querschnittsform auf. Eine äußere Mantelfläche der Dichtung kann im unmontierten Zustand im Wesentlichen zylinderförmig sein.

Unter einer definierten Verformung der Dichtung ist insbesondere ein Zusammendrücken oder Zusammenpressen in einer axialen Richtung, das heißt in einer Richtung parallel zu einer Rotationsachse der Dichtung, zu verstehen. Dies bewirkt eine Reduzierung der axialen Ausdehnung der Dichtung, das heißt, es wird eine axiale Dicke der Dichtung verringert. Durch diese Dickenreduzierung erfolgt eine Durchmesservergrößerung. Dabei entsteht an der Mantelfläche eine Wölbung, welche einen Radius aufweist, der so groß ist, dass ein leicht zu reinigender und im Wesentlichen spaltfreier Übergang zwischen der Dichtung und der Platte sowie zwischen der Dichtung und einem angrenzenden Teil der Halterung erzielt wird.

Die beiden Buchsenteile können grundsätzlich auf beliebige Weise miteinander verbunden werden. Eine besonders vorteilhafte Verbindungsart besteht jedoch darin, dass das erste Buchsenteil und das zweite Buchsenteil jeweils ein Gewinde zum miteinander Verschrauben aufweisen. Das Gewinde ermöglicht die Verwendung der Halterung mit Platten unterschiedlicher Stärke beziehungsweise Dicke. Dabei werden die Buchsenteile vorzugsweise so weit ineinander verschraubt, bis zumindest eine Anschlagfläche an der Platte anliegt und so mindestens ein Buchsenteil an der Platte abgestützt wird.

Sofern beide Seiten der Platte zu einem hygienisch anspruchsvollen Bereich gehören ist es bevorzugt, dass beide Buchsenteile eine Anschlagfläche aufweisen, durch welche sie an der Platte abstützbar sind. Weiterhin ist es bevorzugt, dass zwei Dichtungen vorgesehen sind, die im montierten Zustand um ein definiertes Maß zusammenpressbar sind, wobei jeweils eine definierte Verformung der Dichtung zum Herstellen eines spaltfreien Übergangs erzeugbar ist.

Vorzugsweise ist die Anschlagfläche in einer Ebene angeordnet, die quer zu einer Längsachse der Öffnungen der Buchsenteile verläuft.

In einer bevorzugten Ausführungsform ist eine weitere Dichtung zum Anordnen zwischen dem zweiten Buchsenteil und der Platte vorgesehen. Die weitere Dichtung dichtet damit einen Übergang oder Spalt zwischen dem zweiten Buchsenteil und der Platte ab. Dabei liegt die Dichtung zwischen einer Anlagefläche an dem zweiten Buchsenteil und einer Oberfläche der Platte. Ein Abstand zwischen der Anlagefläche und der Oberfläche der Platte ist dabei so an die Dichtung angepasst, dass die gewünschte definierte Verformung erreicht wird, wenn das zweite Buchsenteil die Platte an der Anschlagfläche kontaktiert.

Erfindungsgemäß ist vorgesehen, dass mindestens eine erste Überwurfhülse vorhanden ist, welche mit dem ersten Buchsenteil verbindbar, insbesondere verschraubbar ist. Die Überwurfhülse kann insbesondere dazu dienen, einen direkten Kontakt des Buchsenteils mit der Umgebung zu vermeiden. Hierdurch ist es möglich, das Buchsenteil aus einem Werkstoff herzustellen, welcher für einen Einsatz in einer hygienischen Umgebung nicht geeignet ist. Die Überwurfhülse besteht vorzugsweise aus einem harten, für eine hygienische Umgebung geeigneten Werkstoff, wie beispielsweise ein entsprechender Kunststoff oder Edelstahl.

Erfindungsgemäß ist die Dichtung zum Anordnen zwischen der ersten Uberwurfhülse und der Platte vorgesehen. Hierzu weist das erste Buchsenteil, mit welchem die erste Überwurfhülse zu verbinden ist, eine erste Anschlagfläche zum Abstützen an der Platte und eine zweite Anschlagfläche auf, an welcher die Überwurfhülse abstützbar ist. Die beiden Anschlagflächen, die Überwurfhülse und die Dichtung sind so aufeinander abgestimmt, dass in einem montierten Zustand ein definierter Spalt oder Aufnahmebereich zwischen der Platte und der Überwurfhülse gebildet wird, in welchem die Dichtung um ein definiertes Maß zusammenpressbar ist. Hierdurch wird die gewünschte Verformung zur Ausbildung einer spaltfreien Abdichtung beziehungsweise eines spaltfreien Übergangs erzeugt.

Es ist bevorzugt, dass die Überwurfhülse eine Öffnung zum Hindurchführen des zylindrischen Objekts aufweist und dass zum Abdichten eines Spalts zwischen dem zylindrischen Objekts und der Überwurfhülse mindestens eine weitere Dichtung angeordnet ist. Die Öffnung in der Überwurfhülse ist vorzugsweise kreisförmig gestaltet und an einer axialen Stirnseite der Halterung angeordnet. Die weitere Dichtung weist vorzugsweise einen radial nach außen vorstehenden Bundabschnitt auf, der zwischen einer axialen Stirnfläche der Überwurfhülse und einer axialen Stirnfläche des Buchsenteils im montierten Zustand angeordnet ist.

Eine einfache Verschraubung der Buchsenteile miteinander lässt sich dadurch erreichen, dass das zweite Buchsenteil einen radial nach außen vorstehenden Bund aufweist, dass eine zweite Dichtung zum Anordnen zwischen dem Bund und der Platte vorgesehen ist und dass eine weitere Dichtung zwischen dem Bund und einer zweiten Überwurfhülse angeordnet ist. Der Bund bietet einen Angriffspunkt für das zweite Buchsenteil, mit welchem das zweite Buchsenteil gegenüber dem ersten Buchsenteil zum Herstellen oder Lösen der Schraubverbindung gedreht werden kann. Grundsätzlich kann der Bund einstückig mit dem zweiten Buchsenteil ausgebildet sein. Es ist aber auch möglicht, dass der Bund als separates, mit dem Buchsenteil fest verbundenes Teil hergestellt ist. Der Bund kann ein anderes Material aufweisen als das Buchsenteil.

Eine besonders einfache Verschraubung lässt sich erzielen, wenn der Bund eine profilierte Außenkontur aufweist. Die Außenkontur kann insbesondere so ausgestaltet sein, dass sie an einen Schraubenschlüssel angepasst ist. Hierdurch lässt sich das zweite Buchsenteil mit einem Schraubenschlüssel verdrehen.

Eine vorteilhafte Ausgestaltung besteht darin, dass der Bund zumindest bereichsweise radial nach außen über die zweite und die zwischen dem Bund und der Überwurfhülse angeordnete weitere Dichtung hervorsteht. Hierdurch kann der Bund einfach, beispielsweise mittels eines Schraubenschlüssels, kontaktiert werden, ohne dass die Dichtungen den Zugang zu dem Bund versperren. Weiterhin ist es bevorzugt, dass der Bund über die Überwurfhülse zumindest bereichsweise radial hervorsteht. Der Bund hat also vorzugsweise zumindest bereichsweise einen Außendurchmesser, welcher größer ist als ein maximaler Außendurchmesser der beiden Dichtungen und der Überwurfhülse.

Gemäß einer weiteren bevorzugten Ausgestaltung ist vorgesehen, dass das erste Buchsenteil und/oder das zweite Buchsenteil eine Fixierungskontur zur drehfesten Fixierung an dem Durchbruch der Platte aufweist. Hierdurch ist es möglich, dass entsprechende Buchsenteil drehfest in der Platte anzuordnen, so dass das weitere Buchsenteil mit dem ersten Buchsenteil verschraubt werden kann, ohne dass sich das erste Buchsenteil mitdreht. Gemäß dieser Ausführungsform ist vorgesehen, dass die Platte eine zumindest nicht kreisrunde Öffnung aufweist.

Die Halterungsteile sind vorzugsweise aus Lebensmittel zugelassenem V4A-Stahl ausgeführt. Sie können als Drehteil, Feingussteil oder im Spritzgussverfahren, insbesondere durch sogenanntes Metallpulver Spritzgießen (MIM-Metal injection molding) hergestellt sein. Zur Erzeugung einer glatten Oberfläche können die Teile gleitgeschliffen oder elektropoliert sein.

Alle Dichtungselemente beziehungsweise Dichtungen sind vorzugsweise aus einem Werkstoff hergestellt, der für den Lebensmittelbereich zugelassen ist. Besonders bevorzugte Werkstoffe sind Fluorelastomere (FKM) oder Silikon-Kautschuk (VMQ).

Weitere Vorteile und Merkmale der erfindungsgemäßen Halterung werden nachstehend mit Bezug auf die beigefügten schematischen Zeichnungen in weiteren Details beschrieben. Hierin zeigt:
- Fig. 1: eine Querschnittsansicht einer Ausführungsform einer erfindungsgemäßen Halterung im montierten Zustand;
- Fig. 2: eine Explosionsdarstellung der Halterung aus Fig. 1;
- Fig. 3: eine weitere Explosionsdarstellung der Halterung aus Fig. 1 und
- Fig. 4: Querschnittsansicht einer Ausführungsform einer nicht erfindungsgemäßen Halterung im montierten Zustand.

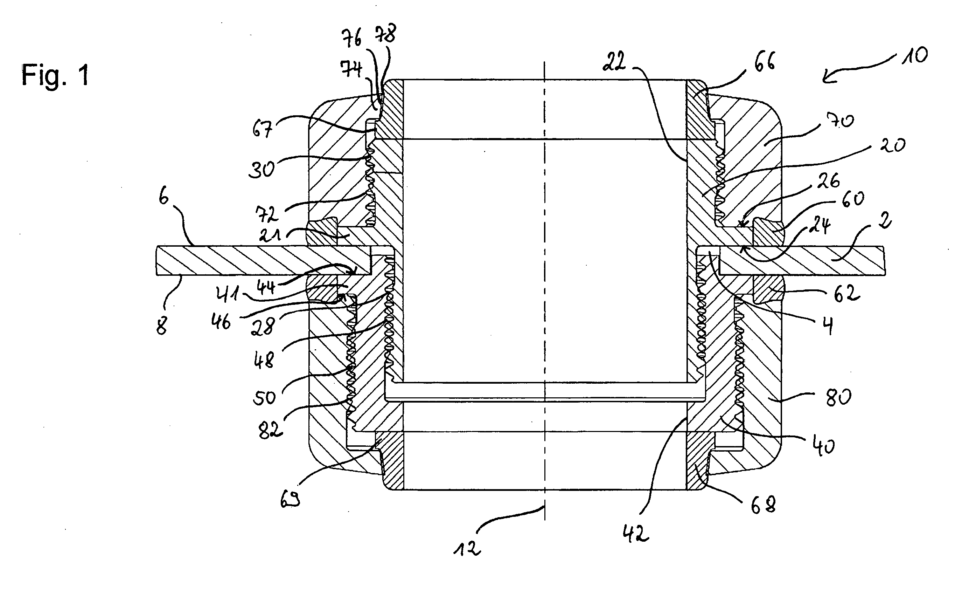

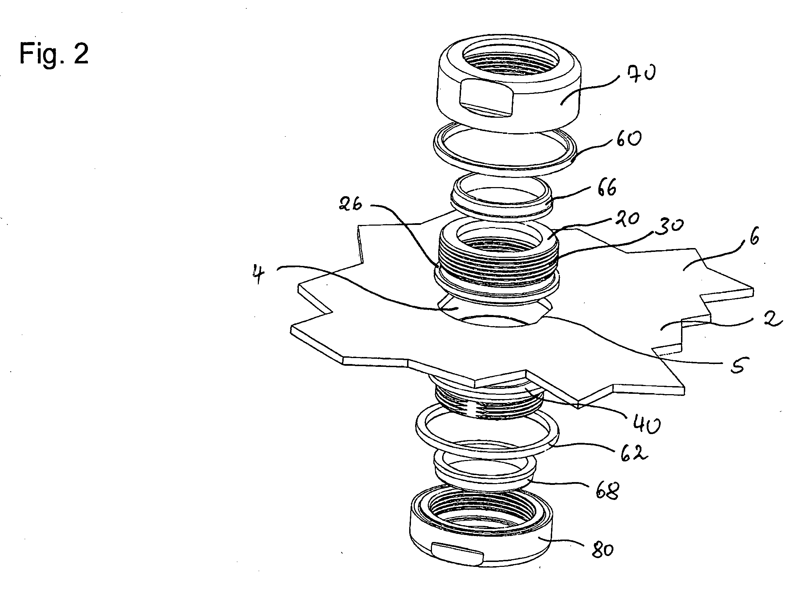

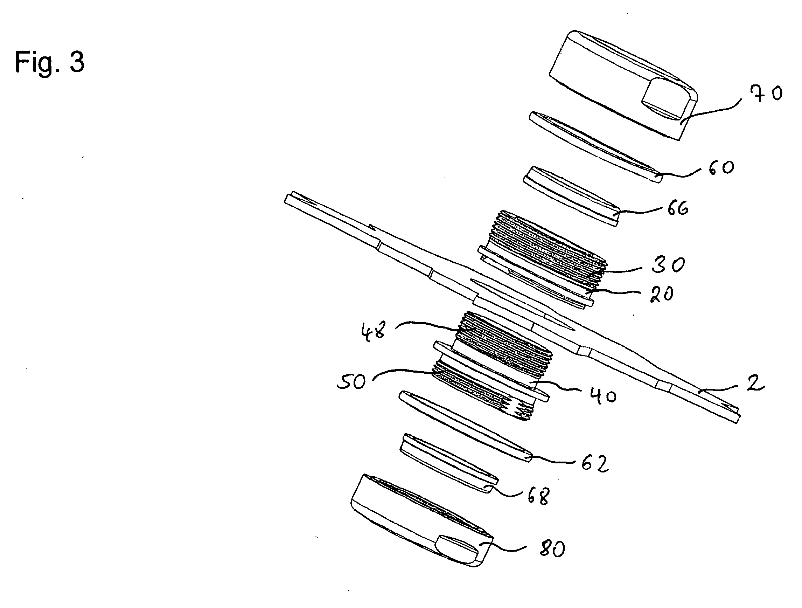

Eine Ausführungsform einer erfindungsgemäßen Halterung wird nachstehend mit Bezug auf die Figuren 1 bis 3 beschrieben. Fig. 1 zeigt die Halterung 10 in einem montierten Zustand. Figuren 2 und 3 zeigen die Halterung 10 in Explosionsdarstellungen in unterschiedlicher Perspektive.

Die Halterung 10 ist dazu vorgesehen, ein zylindrisches Element, beispielsweise einen Sensor, in einem Durchbruch 4 einer Platte 2 zu befestigen. Bei der Platte 2 handelt es sich allgemein um eine Montagefläche, die zumindest im Bereich des Durchbruchs 4 plattenförmig ausgebildet ist. Die Platte 2 weist eine erste Seite 6 und eine zweite Seite 8 auf. Eine Längsachse 12 der Halterung 10 ist quer zu einer Plattenebene angeordnet.

Die Platte 2 kann sich in einem hygienisch anspruchsvollen Bereich, beispielsweise in einem Lebensmittel verarbeitenden Betrieb, befinden. Die Montage des Sensors muss entsprechend gewisse Hygieneanforderungen erfüllen, wozu insbesondere eine spaltfreie Anordnung und eine gute Reinigbarkeit gehören. Dies betrifft grundsätzlich beide Seiten 6, 8 der Platte 2. In bestimmten Situationen kann allerdings die Platte 2 eine Grenze zwischen einem hygienischen Bereich und einem nicht hygienischen Bereich darstellen. In diesem Fall muss die Montage lediglich auf einer der Seiten 6, 8 der Platte 2 hygienisch sein.

Die Halterung 10 umfasst zwei Buchsenteile, nämlich ein erstes Buchsenteil 20 und ein zweites Buchsenteil 40. Im montierten Zustand befindet sich das erste Buchsenteil 20 auf der ersten Seite 6 der Platte 2 und das zweite Buchsenteil 40 auf der zweiten Seite 8 der Platte 2.

Das erste Buchsenteil 20 weist einen ersten Verbindungsabschnitt zum Verbinden mit dem zweiten Buchsenteil 40 auf, welcher im montierten Zustand durch den Durchbruch 4 der Platte 2 hindurchgeführt ist. Das zweite Buchsenteil 40 weist einen zweiten Verbindungsabschnitt zum Verbinden mit dem ersten Buchsenteil 20 auf, welcher in den Durchbruch 4 hineinragt.

Beide Buchsenteile 20, 40 sind somit im montierten Zustand mit einem Abschnitt in dem Durchbruch 4 der Platte 2 angeordnet, wobei eines der Buchsenteile 20, 40 durch den Durchbruch 4 auf die gegenüberliegende Seite der Platte 2 geführt ist und das andere Buchsenteil lediglich in den Durchbruch 4 hineinragt. Grundsätzlich ist es jedoch ausreichend, wenn nur eines der beiden Buchsenteile 20, 40 in den Durchbruch 4 hineinragt oder durch diesen hindurchgeführt ist.

Die Buchsenteile 20, 40 können miteinander verschraubt werden. Hierzu ist an dem ersten Buchsenteil 20 ein erstes Gewinde 28 und an dem zweiten Buchsenteil 40 ein zweites Gewinde 48 vorhanden. Eines der Gewinde 28, 48 ist als Außengewinde und das andere ist als Innengewinde ausgeführt. In der dargestellten Ausführungsform weist das erste Buchsenteil 20, dessen Verbindungsabschnitt durch den Durchbruch 4 hindurchgeführt ist, ein Außengewinde und das zweite Buchsenteil 40 ein Innengewinde auf.

Die beiden Buchsenteile 20, 40 weisen jeweils eine Öffnung 22, 42 zur Aufnahme des zylindrischen Objekts, zum Beispiel des Sensors, auf. Die Öffnungen 22, 42 sind im montierten Zustand der Halterung 10 koaxial zu dem Durchbruch 4 in der Platte 2 ausgerichtet. Zumindest eines der Buchsenteile 20, 40, welches auch als inneres Buchsenteil bezeichnet werden kann, weist eine im Wesentlichen zylinderförmige innere Mantelfläche auf. Für eine stabile Halterung des Sensors haben jedoch beide Buchsenteile 20, 40 mindestens einen Abschnitt mit einer zylinderförmigen inneren Mantelfläche, vorzugsweise mit gleichen Durchmessern.

Auf das erste Buchsenteil 20 ist eine erste Überwurfhülse 70 aufgeschraubt, die eine Öffnung aufweist, durch die das zylindrische Objekt hindurchgeführt werden kann. Zum Aufschrauben der Überwurfhülse 70 weist das erste Buchsenteil 20 ein Außengewinde 30 und die Überwurfhülse 70 ein Innengewinde 72 auf.

Auf das zweite Buchsenteil 40 ist eine zweite Überwurfhülse 80 in entsprechender Weise aufgeschraubt. Das zweite Buchsenteil 40 weist hierzu ein Außengewinde 50 und die Überwurfhülse 80 ein Innengewinde 82 auf.

Damit sich zwischen der Platte 2 und der Halterung 10 keine Schmutzstoffe oder sonstige Ablagerungen festsetzen können, ist die Halterung 10 gegenüber der Platte 2 abgedichtet. Hierzu sind zwei Dichtungen 60, 62 vorgesehen, die im montierten Zustand auf gegenüberliegenden Seiten der Platte 2 angeordnet sind. Eine erste Dichtung 60 ist zwischen der ersten Überwurfhülse 70 und der Platte 2 angeordnet und dichtet so einen Spalt zwischen der ersten Überwurfhülse 70 und der Platte 2 ab. Eine zweite Dichtung 62 ist zwischen der zweiten Überwurfhülse 80 und der Platte 2 angeordnet und dichtet so einen Spalt zwischen der zweiten Überwurfhülse 80 und der Platte 2 ab.

Um an den genannten Stellen jeweils einen im Wesentlichen spaltfreien Übergang beziehungsweise eine spaltfreie Abdichtung zu erzielen, sind an den Buchsenteilen 20, 40 Anschlagflächen vorgesehen, durch welche der jeweils abzudichtende Spalt eine definierte Größe erhält, so dass bei der einzusetzenden Dichtung im montierten Zustand eine definierte Verformung hervorgerufen wird. Hierdurch kann die Halterung 10 auch in hygienisch anspruchsvollen Umgebungen, wie beispielsweise im Lebensmittelbereich, eingesetzt werden.

Bei der in den Figuren 1 bis 3 dargestellten Ausführungsform weist das erste Buchsenteil 20 eine erste Anschlagfläche 24 auf, mit der das erste Buchsenteil 20 an der Platte 2 abgestützt werden kann. Weiterhin weist das erste Buchsenteil 20 eine zweite Anschlagfläche 26 auf, an welcher die erste Überwurfhülse 70 derart abgestützt werden kann, dass im montierten Zustand ein Spalt einer definierten Größe zwischen der Platte 2 und der ersten Überwurfhülse 70 gebildet wird. Die erste Dichtung 60 ist in dem Spalt zwischen der Platte 2 und der ersten Überwurfhülse 70 angeordnet und wird im montierten Zustand um ein definiertes Maß zusammengepresst. Hierdurch entsteht eine definierte Verformung der Dichtung 60. Die Dichtung 60 ist so angepasst, dass durch die definierte Verformung ein spaltfreier Übergang von der Platte 2 zu der ersten Überwurfhülse 70 erzeugt wird.

Zur Bereitstellung der Anschlagflächen 24, 26 weist das erste Buchsenteil 20 einen bundartigen, ringförmigen Vorsprung 21 auf, an dem auf einer ersten Seite die Anschlagfläche 24 und auf einer zweiten Seite die Anschlagfläche 26 gebildet ist.

Das zweite Buchsenteil 40 weist entsprechend eine dritte Anschlagfläche 44 auf, mit welcher es an der gegenüberliegenden Seite 6 der Platte 2 abstützbar ist. Weiterhin weist das zweite Buchsenteil 40 eine vierte Anschlagfläche 46 auf, an welcher die zweite Überwurfhülse 80 derart abgestützt werden kann, dass im montierten Zustand ein Spalt einer definierten Größe zwischen der Platte 2 und der zweiten Überwurfhülse 80 gebildet wird. Die zweite Dichtung 62 ist in dem Spalt zwischen der Platte 2 und der zweiten Überwurfhülse 80 angeordnet und wird im montierten Zustand um ein definiertes Maß zusammengepresst. Hierdurch entsteht eine definierte Verformung der Dichtung 62. Die Dichtung 62 ist so angepasst, dass durch die definierte Verformung ein spaltfreier Übergang von der Platte 2 zu der zweiten Überwurfhülse 80 erzeugt wird.

Zur Bereitstellung der Anschlagflächen 44, 46 weist das zweite Buchsenteil 40 einen bundartigen, ringförmigen Vorsprung 41 auf, an dem auf einer ersten Seite die Anschlagfläche 44 und auf einer zweiten Seite die Anschlagfläche 46 gebildet ist.

Durch die Dichtungen 60, 62 ist die Halterung 10 vollständig gegenüber der Platte 2 abgedichtet und es entstehen keine Spalten oder Ritzen, an denen sich Ablagerungen festsetzen können.

Zur Abdichtung eines Spalts zwischen dem zylindrischen Objekt und den Überwurfhülsen 70, 80 sind weitere Dichtungen 66, 68 vorgesehen. Eine dritte Dichtung 66 ist in einer axialen Öffnung der ersten Überwurfhülse 70 angeordnet und stellt einen spaltfreien Übergang von der ersten Überwurfhülse 70 zu dem zylindrischen Objekt bereit.

Zur axialen Fixierung der dritten Dichtung 66 weist die dritte Dichtung 66 einen Bundabschnitt 67 auf, welcher sich im montierten Zustand an einem bundartigen Abstützbereich 74 der ersten Überwurfhülse 70 abstützt. Der Bundabschnitt 67 ist zwischen dem bundartigen Abstützbereich 74 und dem ersten Buchsenteil 20 aufgenommen.

Um zwischen der ersten Überwurfhülse 70 und der dritten Dichtung 66 einen spaltfreien Übergang bereitzustellen, weist der Abstützbereich 74 der ersten Überwurfhülse 70 eine kegelige Innenmantelfläche 76 und die dritte Dichtung 66 eine kegelige Außenmantelfläche 78 auf. Die kegelige Innenmantelfläche 76 der ersten Überwurfhülse 70 ist gegenüber der Längsachse 12 der Halterung stärker geneigt als die kegelige Außenmantelfläche 78 der dritten Dichtung 66. Durch die unterschiedlichen Kegelwinkel an der Überwurfhülse 70 und der dritten Dichtung 66 ergibt sich an der nach außen gerichteten Dichtkante eine Druckspitze, die eine hygienische und spaltfreie Abdichtung sicherstellt. Dabei ist an der Überwurfhülse 70 an einem äußeren Übergangsbereich zwischen der ersten Überwurfhülse 70 und der Dichtung 66 eine Kante gebildet, die als eine Schneide wirkt, so dass sich Material der ersten Überwurfhülse 70 in die Dichtung 66 hineinarbeitet.

Durch ein Anziehen beziehungsweise Aufschrauben der Überwurfhülse 70 auf das Buchsenteil 20 wird die Dichtung 66 zudem über die kegelige Außenmantelfläche 78 zum zylindrischen Objekt hin gedrückt und führt so zu einem hygienischen, spaltfreien Übergang von der Dichtung 66 zu dem zylindrischen Objekt.

Die zueinander schräg gerichteten Kegelflächen an der Überwurfhülse 70 und der dritten Dichtung 66 werden während der Montage axial zueinander bewegt, während die Überwurfhülse 70 in Richtung der Anschlagfläche 26 schraubend bewegt wird.

Durch die Abstützung der ersten Überwurfhülse 70 an der zweiten Anschlagfläche 26 des ersten Buchsenteils 20 ist zwischen der Überwurfhülse 70 und dem Buchsenteil 20 definierter Spalt mit einer definierten Größe gebildet.

In entsprechender Weise ist an dem gegenüberliegenden Ende der Halterung 10 zwischen dem zweiten Buchsenteil 40 und der zweiten Überwurfhülse 80 eine vierte Dichtung 68 mit einem entsprechenden Bundabschnitt 69 und einer kegeligen Außenmantelfläche angeordnet.

Zur drehfesten Aufnahme in dem Durchbruch 4 der Platte 2 weist eines der Buchsenteile 20, 40, vorzugsweise das zweite Buchsenteil 40, eine Eingriffskontur auf, die an eine entsprechende Kontur des Durchbruchs 4 angepasst ist. Der Durchbruch ist vorzugsweise nicht kreisrund ausgeführt und kann beispielsweise eine Abflachung 5 aufweisen. Dementsprechend umfasst die Eingriffskontur ebenfalls eine entsprechende Abflachung.

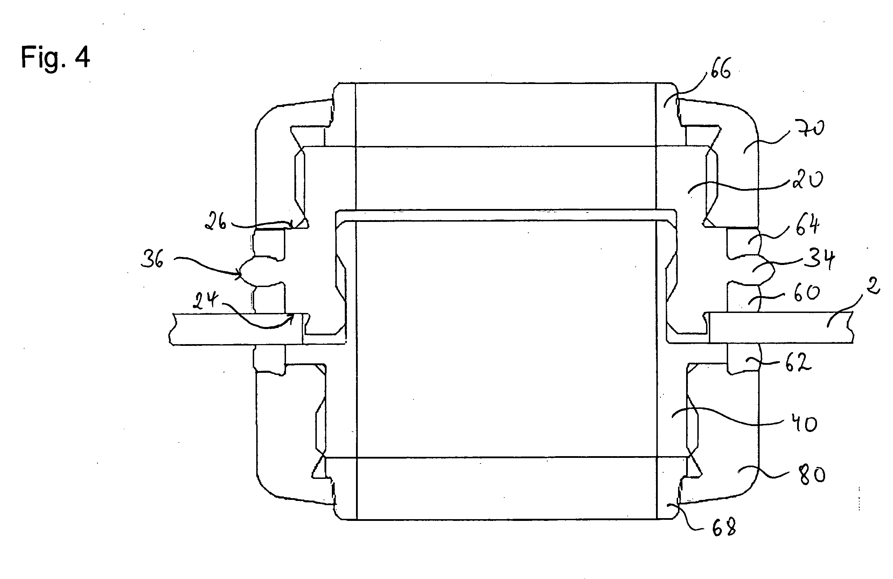

Eine weitere Ausführungsform einer Halterung 10, die nicht zur Erfindung gehört, ist in Fig. 4 dargestellt.

Im Unterschied zu der erfindungsgemäßen Ausführungsform weist das erste Buchsenteil 20 einen Bund 34 auf, der an einer äußeren Mantelfläche des Buchsenteils 20 angeformt ist und eine ringförmige Gestalt hat. Der Bund 34 befindet sich an einer äußeren Mantelfläche des Buchsenteils 20 zwischen der ersten Anschlagfläche 24 und der zweiten Anschlagfläche 26 und hat eine profilierte Außenkontur 36.

Die erste Dichtung 60 ist im Unterschied zu der ersten Ausführungsform zwischen der Platte 2 und dem Bund 34 angeordnet. Die erste Anschlagfläche 24 stützt sich im montierten Zustand an der Platte 2 ab. Hierdurch wird im montierten Zustand ein Spalt einer definierten Größe zwischen der Platte 2 und dem Bund 34 gebildet, so dass die erste Dichtung 60 im montierten Zustand um ein definiertes Maß zusammengepresst und definiert verformt wird. Die Dichtung 60 ist so angepasst, dass durch die definierte Verformung ein spaltfreier Übergang von der Platte 2 zu dem Bund 34 erzeugt wird.

Zur Abdichtung der ersten Überwurfhülse 70 gegenüber dem Bund 34 ist zwischen dem Bund 34 und der ersten Überwurfhülse 70 eine fünfte Dichtung 64 angeordnet. Um auch hier einen spaltfreien Übergang zu gewährleisten, stützt sich die Überwurfhülse 70 an der zweiten Anschlagfläche 26 ab, so dass ein Spalt einer definierten Größe zwischen der ersten Überwurfhülse 70 und dem Bund 34 entsteht. In diesem Spalt definierter Größe wird die fünfte Dichtung 64 im montierten Zustand um ein definiertes Maß zusammengepresst und definiert verformt.

Die Halterung 10 ermöglicht in einer hygienischen Umgebung eine Befestigung eines zylindrischen Objekts, insbesondere eines Sensors, in einem Durchbruch 4 einer Platte 2. Alle Dichtungen sind für den Einsatz in einer hygienischen Umgebung geeignet und dichten im Wesentlichen spaltfrei ab. Durch den Einsatz geeigneter Materialien mit glatten Oberflächen und eine günstige Formgebung ist die Halterung einfach zu reinigen und daher insgesamt hervorragend für den Einsatz im hygienischen Bereich geeignet.

## Patentansprüche

1. Halterung für ein zylindrisches Objekt, insbesondere ein Rohr oder einen Sensor, in einem Durchbruch (4) einer Platte (2) in einer hygienisch anspruchsvollen Umgebung
- mit einem ersten Buchsenteil (20) zum Anordnen auf einer ersten Seite (6) der Platte (2),
- mit einem zweiten Buchsenteil (40) zum Anordnen auf einer zweiten Seite (8) der Platte (2) und
- mit mindestens einer Dichtung (60, 62) zum Anordnen in einem Aufnahmebereich zwischen der Halterung (10) und der Platte (2),
- wobei die Buchsenteile (20, 40), insbesondere im Bereich des Durchbruchs (4), miteinander verbindbar sind und jeweils eine Öffnung (22, 42) zum Aufnehmen des zylindrischen Objekts aufweisen,
wobei mindestens eine erste Überwurfhülse (70) vorhanden ist, welche mit dem
ersten Buchsenteil (20) verbindbar, insbesondere verschraubbar, ist, und wobei das erste Buchsenteil (20) eine erste Anschlagfläche (24) aufweist, mit der das erste Buchsenteil (20) an der Platte (2) abstützbar ist,
**dadurch gekennzeichnet,**
**dass** das erste Buchsenteil (20) eine zweite Anschlagfläche (26) aufweist, an welcher die erste Überwurfhülse (70) derart abgestützt werden kann, dass im montierten Zustand ein Spalt einer definierten Größe zwischen der Platte (2) und der ersten Überwurfhülse (70) gebildet wird, und
**dass** eine erste Dichtung (60) in einem montierten Zustand in dem Spalt zwischen der Platte (2) und der ersten Überwurfhülse (70) angeordnet und um ein definiertes Maß zusammenpressbar ist, wobei eine definierte Verformung der ersten Dichtung (60) zum Herstellen eines spaltfreien Übergangs erzeugbar ist.

2. Halterung nach Anspruch 1,
**dadurch gekennzeichnet,**
**dass** mindestens eine zweite Überwurfhülse (80) vorhanden ist, welche mit dem zweiten Buchsenteil (40) verbindbar, insbesondere verschraubbar, ist, dass das zweite Buchsenteil (40) eine dritte Anschlagfläche (44) aufweist, mit der das zweite Buchsenteil (40) an der Platte (2) abstützbar ist,
**dass** das zweite Buchsenteil (40) eine vierte Anschlagfläche (46) aufweist, an welcher die zweite Überwurfhülse (80) derart abgestützt werden kann, dass im montierten Zustand ein Spalt einer definierten Größe zwischen der Platte (2) und der zweiten Überwurfhülse (80) gebildet wird, und
**dass** eine zweite Dichtung (62) in einem montierten Zustand in dem Spalt zwischen der Platte (2) und der zweiten Überwurfhülse (80) angeordnet und um ein definiertes Maß zusammenpressbar ist, wobei eine definierte Verformung der zweiten Dichtung (62) zum Herstellen eines spaltfreien Übergangs erzeugbar ist.

3. Halterung nach Anspruch 1 oder 2,
**dadurch gekennzeichnet,**
**dass** das erste Buchsenteil (20) und/oder das zweite Buchsenteil (40) eine Fixierungskontur zur drehfesten Fixierung an dem Durchbruch (4) in der Platte (2) aufweist.

4. Halterung nach einem der Ansprüche 1 bis 3,
**dadurch gekennzeichnet,**
**dass** die Überwurfhülse (70, 80) eine Öffnung zum Hindurchführen des zylindrischen Objekts aufweist und
**dass** zum Abdichten eines Spalts zwischen dem zylindrischen Objekt und der Überwurfhülse (70, 80) mindestens eine weitere Dichtung (66, 68) angeordnet ist.

5. Halterung nach einem der Ansprüche 1 bis 4,
**dadurch gekennzeichnet,**
**dass** das erste Buchsenteil (20) und das zweite Buchsenteil (40) jeweils ein Gewinde (28, 48) zum miteinander Verschrauben aufweisen.

6. Halterung nach Anspruch 1,
**dadurch gekennzeichnet,**
**dass** das zweite Buchsenteil (40) einen radial nach außen vorstehenden Bund (34) aufweist,
**dass** eine zweite Dichtung (62) zwischen dem Bund (34) und der Platte (2) angeordnet ist und
**dass** eine weitere Dichtung (64) zwischen dem Bund (34) und einer zweiten Überwurfhülse (80) angeordnet ist.

7. Halterung nach Anspruch 6,
**dadurch gekennzeichnet,**
**dass** der Bund (34) eine profilierte Außenkontur (36) aufweist.

8. Halterung nach Anspruch 6 oder 7,
**dadurch gekennzeichnet,**
**dass** der Bund (34) zumindest bereichsweise radial nach außen über die zweite und die zwischen dem Bund (34) und der Überwurfhülse (70, 80) angeordnete weitere Dichtung (64) hervorsteht.

9. Halterung nach Anspruch 1,
**dadurch gekennzeichnet,**
**dass** eine zweite Dichtung (62) zwischen dem zweiten Buchsenteil (40) und der Platte (2) angeordnet ist.

## Claims

1. A holder for a cylindrical object, more particularly a tube or a sensor, located in a hole (4) in a plate (2) in a hygienically demanding environment, comprising
- a first bushing element (20) for positioning on a first side (6) of the plate (2),
- a second bushing element (40) for positioning on a second side (8) of said plate (2) and
- at least one gasket (60, 62) for positioning in an enclosing region between said holder (10) and said plate (2),
- wherein said bushing elements (20, 40) are interconnectable, particularly in the region of said hole (4), and in each case comprise an opening (22, 42) for the accommodation of said cylindrical object,
wherein at least a first sleeve type retainer (70) is present that can be connected to said first bushing element (20), more particularly by screwing,
and wherein said first bushing element (20) has a first contact face (24), by means of which said first bushing element (20) can bear against said plate (2), **characterized** inthat
said first bushing element (20) comprises a second contact face (26), against which said first sleeve type retainer (70) can bear such that in the mounted state a gap of a defined size is formed between said plate (2) and said first sleeve type retainer (70), and
that a first gasket (60) is, in a mounted state, disposed in the gap between said plate (2) and said first sleeve type retainer (70) and is compressible to a defined extent, wherein a defined deformation of said first gasket (60) can be produced for the purpose of forming a gapless transition region.

2. The holder as defined in claim 1,
**characterized in that**
at least a second sleeve type retainer (80) is present that can be connected to said second bushing element (40), more particularly by screwing, that the second bushing element (40) comprises a third contact face (44), by means of which said second bushing element (40) can bear against said plate (2), that the second bushing element (40) comprises a fourth contact face (46), against which said second sleeve type retainer (80) can bear such that in the mounted state a gap of a defined size is formed between said plate (2) and said second sleeve type retainer (80), and
that a second gasket (62) is, in a mounted state disposed in the gap between said plate (2) and said second sleeve type retainer (80) and is compressible to a defined extent, wherein a defined deformation of said second gasket (62) can be produced for the purpose of producing a gapless transition region.

3. The holder as defined in claim 1 or claim 2,
**characterized** inthat
said first bushing element (20) and/or said second bushing element (40) each have a locking profile for non-rotatably locking the same against said hole (4) in said plate (2).

4. The holder as defined in any one of claims 1 to 3,
**characterized** inthat
said sleeve type retainer (70, 80) has an opening for guiding through the cylindrical object and
that at least one further gasket (66, 68) is provided for sealing a gap between the cylindrical object and the sleeve type retainer (70, 80).

5. The holder as defined in any one of claims 1 to 4,
**characterized in that**
said first bushing element (20) and said second bushing element (40) each has a screw thread (28, 48) for the purpose of screwing them together.

6. The holder as defined in claim 1,
**characterized in that**
the second bushing element (40) comprises a radially outwardly protruding collar (34),
that a second gasket (62) is disposed between said collar (34) and said plate (2) and
that a further gasket (64) is disposed between said collar (34) and a second sleeve type retainer (80)

7. The holder as defined in claim 6,
**characterized in that**
said collar (34) comprises a profiled outside contour (36).

8. The holder as defined in claim 6 or claim 7,
**characterized in that**
said collar (34) protrudes, at least in certain regions, radially outwardly beyond said second gasket and said further gasket (64) disposed between said collar (34) and said sleeve type retainer (70, 80).

9. The holder as defined in claim 1,
**characterized in that**
a second gasket (62) is disposed between said second bushing element (40) and said plate (2).

## Revendications

1. Support pour un objet cylindrique, en particulier un tube ou un capteur, dans un orifice (4) d'une plaque (2) dans un environnement soumis à des exigences hygiéniques,
- avec une première partie de douille (20) destinée à être disposée d'un premier côté (6) de la plaque (2),
- avec une deuxième partie de douille (40) destinée à être disposée d'un deuxième côté (8) de la plaque (2) et
- avec au moins un joint d'étanchéité (60, 62) destiné à être disposé dans une zone de réception entre le support (10) et la plaque (2),
- dans lequel les parties de douille (20, 40), en particulier dans la région de l'orifice (4), peuvent être reliées l'une à l'autre et comprennent chacune une ouverture (22, 42) destinée à recevoir l'objet cylindrique,
dans lequel au moins une première douille de recouvrement (70) est prévue, qui peut être reliée, et en particulier vissée, à la première partie de douille (20),
et dans lequel la première partie de douille (20) comprend une première surface de butée (24), au moyen de laquelle la première partie de douille (20) peut être en appui contre la plaque (2),
**caractérisé :**
**en ce que** la première partie de douille (20) comprend une deuxième surface de butée (26), contre laquelle la première douille de recouvrement (70) peut être en appui de telle manière qu'un espace d'une grandeur définie est formé,
à l'état monté, entre la plaque (2) et la première douille de recouvrement (70), et
**en ce qu'**un premier joint d'étanchéité (60) est disposé, à l'état monté, dans l'espace entre la plaque (2) et la première douille de recouvrement (70) et est compressible d'une quantité déterminée, une déformation définie du premier joint d'étanchéité (60) pouvant ainsi être produite pour la réalisation d'une transition sans jeu.

2. Support selon la revendication 1,
**caractérisé :**
**en ce qu'**au moins une deuxième douille de recouvrement (80) est prévue, qui peut être reliée, et en particulier vissée, à la deuxième partie de douille (40),
**en ce que** la deuxième partie de douille (40) comprend une troisième surface de butée (44), au moyen de laquelle la deuxième partie de douille (40) peut être en appui contre la plaque (2),
**en ce que** la deuxième partie de douille (40) comprend une quatrième surface de butée (46), contre laquelle la deuxième douille de recouvrement (80) peut être en appui de telle manière qu'un espace d'une grandeur définie est formé, à l'état monté, entre la plaque (2) et la deuxième douille de recouvrement (80), et
**en ce qu'**un deuxième joint d'étanchéité (62) est disposé, à l'état monté, dans l'espace entre la plaque (2) et la deuxième douille de recouvrement (80) et est compressible d'une quantité déterminée, une déformation définie du deuxième joint d'étanchéité (62) pouvant ainsi être produite pour la réalisation d'une transition sans jeu.

3. Support selon la revendication 1 ou 2,
**caractérisé :**
**en ce que** la première partie de douille (20) et/ou la deuxième partie de douille (40) comporte(nt) un contour de fixation pour une fixation bloquée en rotation contre l'orifice (4) dans la plaque (2).

4. Support selon une des revendications 1 à 3,
**caractérisé :**
**en ce que** la douille de recouvrement (70, 80) comprend une ouverture pour le passage de l'objet cylindrique, et
**en ce que**, pour la réalisation de l'étanchéité d'un espace entre l'objet cylindrique et la douille de recouvrement (70, 80), au moins un joint d'étanchéité supplémentaire (66, 68) est prévu.

5. Support selon une des revendications 1 à 4,
**caractérisé :**
**en ce que** la première partie de douille (20) et la deuxième partie de douille (40) comprennent chacune une partie filetée (28, 48) pour un vissage de l'une sur l'autre.

6. Support selon la revendication 1,
**caractérisé :**
**en ce que** la deuxième partie de douille (40) comprend une collerette (34) s'avançant radialement vers l'extérieur,
**en ce qu'**un deuxième joint d'étanchéité (62) est disposé entre la collerette (34) et la plaque (2), et
**en ce qu'**un joint d'étanchéité supplémentaire (64) est disposé entre la collerette (34) et une deuxième douille de recouvrement (80).

7. Support selon la revendication 6,
**caractérisé :**
**en ce que** la collerette (34) comprend un contour extérieur profilé (36).

8. Support selon la revendication 6 ou 7,
**caractérisé :**
**en ce que** la collerette (34) dépasse, au moins par endroits et de manière radiale vers l'extérieur, par rapport au deuxième joint et au joint d'étanchéité supplémentaire (64) disposé entre la collerette (34) et la douille de recouvrement (70, 80).

9. Support selon la revendication 1,
**caractérisé :**
**en ce qu'**un deuxième joint d'étanchéité (62) est disposé entre la deuxième partie de douille (40) et la plaque (2).
